# FASCICULE DE BREVET EUROPEEN

(11) **EP 1 729 019 B1**
(45) Date de publication et mention de la délivrance du brevet: **19.01.2011**
(21) Numéro de dépôt: 05291168.2
(22) Date de dépôt: 31.05.2005
(51) Int. Cl.: F16B 37/04

(54) **Agencement de support d'un écrou de fixation d'un objet tel qu'un siège de véhicule automobile**
Anordnung der Halterung einer Befestigungsmutter einer Komponente wie etwa ein Fahrzeugsitz
Arrangement of the holder of a fixation nut of a component such as a vehicle seat

(43) Date de publication de la demande: 06.12.2006
(73) Titulaire: Lisi Automotive Rapid, 95650 Puiseux Pontoise (FR)
(72) Inventeur: Viennois, Fabien, 92100 Boulogne Billancourt (FR)
(74) Mandataire: Berger, Helmut

(56) Documents cités:
- FR-A- 2 545 767
- FR-A- 2 607 561
- FR-A- 2 864 182
- PATENT ABSTRACTS OF JAPAN vol. 2000, no. 24, 11 mai 2001 (2001-05-11) & JP 2001 191832 A (HYUNDAI MOTOR CO LTD), 17 juillet 2001 (2001-07-17)

## Description

L'invention concerne un agencement de support d'un écrou de fixation d'un objet tel qu'un siège de véhicule automobile sur une pièce d'une structure fixe, à l'aide d'une vis s'engageant dans cet écrou.

Les agencements de ce type, qui sont connus (comme par exemple FR 2 607 561 A1, FR 2 545 767 A1), présentent l'inconvénient de ne pas permettre un rattrapage suffisant des jeux dans les trois dimensions de l'espace lors du montage de l'objet sur sa structure de support, ce qui est particulièrement gênant lorsqu'il s'agit de monter des sièges sur un véhicule après la peinture de la caisse.

L'invention a pour but de proposer un agencement de support et qui ne présente pas l'inconvénient qui vient d'être énoncé.

Pour atteindre ce but, l'agencement de support selon l'invention est **caractérisé en ce qu**'il comprend un dispositif de support d'écrou réalisé en au moins deux parties, l'une constituant un organe de base solidarisable de la pièce de structure et l'autre constituant un élément porteur de l'écrou, qui est monté dans l'organe de base, mobile dans la direction de l'axe de l'écrou.

L'invention sera mieux comprise et d'autres buts, caractéristiques, détails et avantages de celle-ci apparaîtront plus clairement de la description explicative qui va suivre faite en référence aux dessins schématiques annexés donnés uniquement à titre d'exemple illustrant un mode de réalisation de l'invention et dans lesquels :
- la figure 1 est une vue partiellement en coupe d'un agencement de support d'écrou de fixation selon l'invention
- la figure 2 est une vue en perspective du dispositif de support d'écrou selon l'invention, indiqué en 10 sur la figure et tel qu'il est sorti du moule ;
- la figure 3 est une vue en perspective du dispositif de support 10 avec l'écrou positionné sur l'élément porte-écrou du dispositif ;
- la figure 4 est une vue en perspective du dispositif de support d'écrou 10 et montre ce dispositif à l'état assemblé livré chez l'utilisateur ;
- la figure 5 est une vue en perspective illustrant le montage du dispositif de support d'écrou 10 sur une traverse de support de siège automobile ; et
- la figure 6 est une vue en élévation illustrant le dispositif de support d'écrou à l'état monté sur la traverse.

L'invention sera décrite ci-après dans son application à un agencement de support d'un écrou de fixation d'un siège de véhicule automobile.

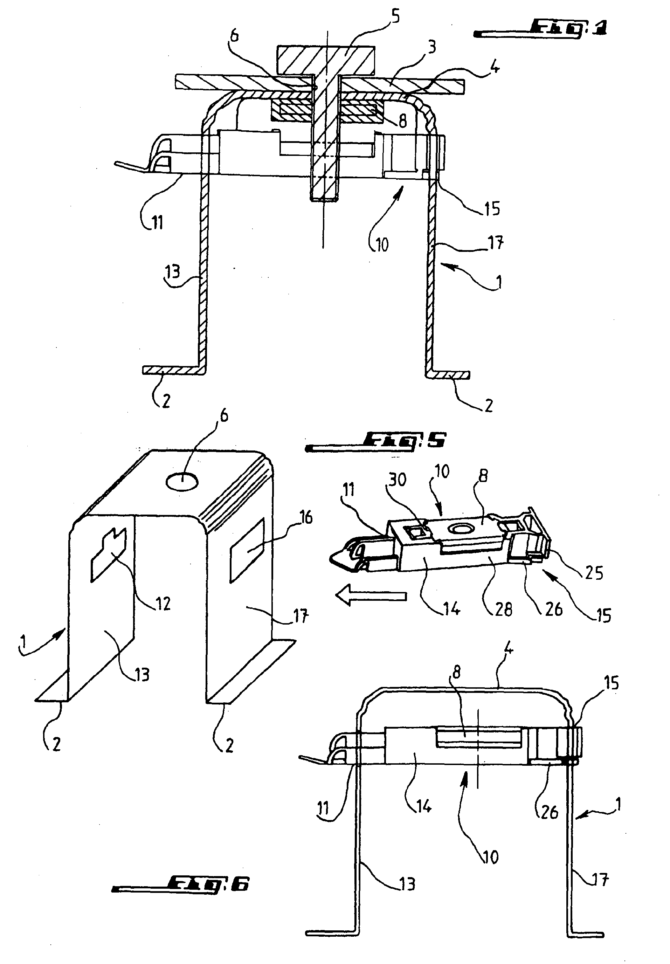

La figure 1 montre en 1 une traverse de support de siège, en forme d'un U, qui est soudé par des pattes 2 recourbées aux extrémités des branches du U sur le véhicule et en 3 une glissière de siège qui prend appui sur la face extérieure de la base 4 de la traverse 1. Une vis de fixation de siège 5 traverse la glissière et la base 4 de la traverse, qui est pourvue à cette fin d'un trou 6. La vis 5 est engagée dans un écrou 8 qui vient en appui sous la face inférieure de la base de traverse 4.

L'écrou 8 est embarqué sur un dispositif de support d'écrou 10 appelé ci-après barquette en raison de sa forme particulière et qui a été préalablement monté sur la traverse 1 dans un logement qui assure un détrompage grâce à sa forme particulière compatible à celle de la barquette.

A cette fin, la barquette comporte une partie avant 11 d'engagement dans une découpe 12 pratiquée dans la branche 13 de la traverse en U, une partie médiane 14 porteuse de l'écrou 8 et une partie arrière 15 susceptible de s'engager dans une découpe 16 prévue dans l'autre branche 17 de la traverse.

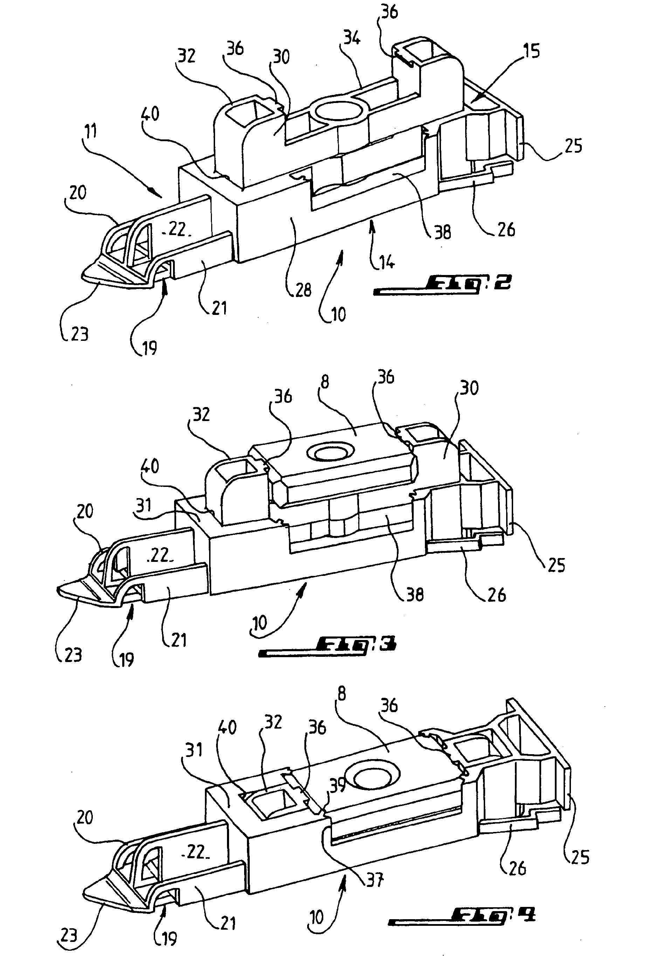

Comme on le voit sur la figure 2, les formes des découpes 12 et 16 sont différentes et adaptées aux formes des parties avant 11 et arrière 15 de la barquette, qui diffèrent l'une de l'autre. Ainsi, la découpe 12 présente la forme d'un T et la découpe 16 est de forme rectangulaire.

La découpe 12 en forme d'un T renversé est adaptée à la configuration particulière de la partie avant 11 de la barquette 10 qui présente un profil global en T établi par un élément 19 en forme d'une plaque qui fait saillie à partir de la partie médiane de support d'écrou, vers l'avant, au niveau de la face inférieure de cette partie médiane et parallèlement à celle-ci et sur laquelle s'étendent perpendiculairement vers le haut, deux barrettes latérales 20, 21 parallèles à l'axe de la barquette et, entre ces deux barrettes, une barrette centrale 22 d'une hauteur plus importante. A son extrémité libre avant, la base 19 de support des barrettes 20 à 22 se termine par une partie 23 en forme d'un V dont la pointe est orientée dans l'axe de barquette. C'est la barrette médiane plus haute 22 qui a déterminé la forme du T de la découpe 12.

La partie arrière 15 de la barquette 10 présente une section transversale sensiblement rectangulaire, adaptée à la forme rectangulaire de la découpe 16. A son extrémité libre, la partie arrière présente sur chaque côté latéral une bride de butée 25 qui fait latéralement saillie vers l'extérieur et qui viennent en appui sur la face extérieure de la branche 17 de la traverse lorsque la barquette 10 se trouve dans sa position d'assemblage à la traverse. Dans cette position, la barquette est ensuite verrouillée grâce à deux clips de verrouillage 26 chacun situé sur un côté de la partie arrière de la barquette. Ces clips sont formés par des languettes qui s'étendent à partir de la partie médiane de la barquette de façon à ce que leurs extrémités libres, à l'état de repos des languettes, se trouvent décalées latéralement vers l'extérieur plus loin que les bords extérieurs des brides 25. A l'état monté de la barquette, ces extrémités sont en regard de la face interne de la branche 17 de la traverse et s'opposent donc à un mouvement de retrait de la barquette. Pour permettre le passage de la partie arrière 15 de la barquette à travers la découpe 16, les languettes 26 sont élastiquement déformables pour pouvoir s'effacer lors de l'opération de mise en place de la barquette.

La partie médiane 14 comporte un corps de forme générale parallélépipédique creux 28 et un élément porteur d'écrou 30 qui est déplaçable dans le corps 28, perpendiculairement à la face supérieure 31 du corps, entre une position engagée ou escamotée dans le corps représentée sur la figure 4 et une position sortie indiquée sur la figure 2. Dans la position escamotée, sa surface supérieure 32 est sensiblement en affleurement avec la surface 31 du corps. La partie médiane de l'élément escamotable est découpée verticalement jusqu'à une profondeur correspondant à la hauteur de l'écrou 8 pour former ainsi le logement de réception de cet écrou. Celui-ci est bloqué, après son insertion, dans ce logement 34 par des projections 36, au niveau de la face supérieure 32 de l'élément porteur, qui viennent en prise sur l'écrou. Etant donné que la largeur de l'écrou est supérieure à la largeur de l'élément 30, et présente avantageusement la même largeur que la largeur de la découpe 16, celui-ci présente une découpe 38 d'une forme complémentaire à celle de l'écrou si bien que, à l'état embarqué, la surface supérieure de l'écrou est en alignement avec la face supérieure 31 du corps de barquette 28. Cette découpe 38 présente au niveau de ses quatre arêtes verticales des saillies de rétrécissement 37 pour maintenir l'écrou latéralement et des pattes 39 venant en prise sur l'écrou.

On constate que l'évidement du logement de l'élément 30 dans le corps 28 présente des sections transversales perpendiculaires à la direction de déplacement de l'élément 30 permettant à ce dernier d'être guidé lors de son déplacement tout en étant immobilisé en rotation.

La barquette est réalisée par moulage et présente en sortie de moulage une structure monobloc avec l'élément porteur d'écrou 30 solidarisé du corps de barquette 10 par des liens sécables qui relient la base de l'élément 30 à la face supérieure 31 du corps 28 sur la largeur, à l'avant et à l'arrière de l'élément porteur 32.

La figure 2 montre la barquette monobloc en sortie de moulage avec les parties à liens sécables 40. La figure 3 montre la barquette monobloc avec l'écrou 8 positionné sur l'élément porteur 30 avant la rupture des liens sécables 40. On constate que l'écrou est verrouillé sur son élément porteur 30 à l'aide des projections de verrouillage 36 et 37. En exerçant ensuite une pression sur l'écrou, on provoque la rupture des liens sécables 40 et l'enfoncement de l'élément 30 avec l'écrou embarqué dans le corps de barquette 28 jusqu'à ce que les faces supérieures du corps, de l'élément porteur et de l'écrou se trouvent au même niveau. La barquette sera livrée, avec l'écrou assemblé, à l'état représenté sur la figure 4, chez les utilisateurs pour leur montage sur la traverse 1, comme cela est illustré sur la figure 5 montrant la barquette prête à être insérée dans les découpes de logement 12, 16, dans le sens indiqué par la flèche. Les formes spécifiques des découpes ou poinçonnages 12 et 16 et des parties avant 11 et arrière 15 de la barquette permettent de détromper le sens de montage. La figure 6 illustre la barquette à l'état monté sur la traverse.

Puis, conformément à la figure 1, on met en place sur la base 4 de la traverse la glissière de siège 3 et engage la vis 5 à travers la glissière 3 et le trou 6 dans la base de la traverse dans l'écrou 8. Etant donné que l'écrou est immobilisé en rotation dans son élément porteur de barquette 30, la rotation de la vis provoque la montée de l'écrou jusqu'à ce que celle-ci vienne se plaquer sous la base 4 de la traverse. Bien entendu, le maintien de l'écrou en rotation reste assuré lors de son serrage contre la traverse.

L'agencement de support d'écrou selon l'invention, qui vient décrit, présente les avantages majeurs de permettre le rattrapage de jeux importants dans les axes X et Y perpendiculaires à l'axe de l'écrou, grâce à une liberté de mouvement de la barquette dans les découpes 12 et 16 dans la traverse 1, et dans la direction Z de l'axe de l'écrou. Le rattrapage dans l'axe Z est égal à la distance de la montée de l'écrou. Il est ainsi possible, grâce à l'invention, de rattraper des jeux de +/- 2,5 mm en X et Y et un jeu égal à la hauteur de la barquette moins la hauteur de prise nécessaire pour le passage du couple lors du serrage de la vis. Le fait que lors de la montée de l'écrou, une partie de la barquette assure la liaison glissière avec le reste de celle-ci permet l'optimisation de l'épaisseur de l'écrou et permet d'utiliser un écrou qui a la même largeur que la barquette et/ou que la découpe 16. Celle-ci permet d'immobiliser l'écrou en rotation, pendant la montée de celle-ci et lors de son serrage contre la traverse. La barquette est monobloc en sortie de moulage avec des parties à liens sécables et à l'état escamoté bloquée sur la barquette et ainsi imperdable, ce qui est particulièrement avantageux pour le transport à des utilisateurs et le montage de la barquette par celui-ci sur la traverse.

## Revendications

1. Agencement de support d'un écrou de fixation d'un objet tel qu'un siège de véhicule automobile, sur une pièce d'une structure fixe (1), à l'aide d'une vis s'engageant dans cet écrou, **caractérisé en ce qu'**il comprend un dispositif de support d'écrou (10) réalisé en au moins deux parties (28, 30), l'une constituant un organe de base (28), solidarisable de la pièce de structure (1) et l'autre constituant un élément porteur (30) de l'écrou (8), qui est monté dans l'organe de base, mobile dans la direction de l'axe de l'écrou.

2. Agencement selon la revendication 1, **caractérisé en ce que** l'élément porteur d'écrou (30) est déplaçable entre une position rentrée dans l'organe de base (28) et une position sortie de fixation de siège.

3. Agencement selon la revendication 2, **caractérisé en ce que** l'élément porteur d'écrou (30) est déplaçable dans le corps de base (28) dans l'axe de l'écrou, tout en étant immobilisé en rotation.

4. Agencement selon l'une des revendications 2 à 3, **caractérisé en ce que**, à l'état de sortie de production, l'élément porteur d'écrou (30) se trouve dans sa position sortie et est relié à l'organe de base (28) par des liens cassables (40).

5. Agencement selon la revendication 4, **caractérisé en ce que** les liens cassables (4) sont cassables par une pression sur l'élément porteur d'écrou (30) dans la direction de son enfoncement dans le corps de base (28).

6. Agencement selon une des revendications 1 à 5, **caractérisé en ce que** l'écrou est susceptible d'être embarqué dans un logement (34) de réception prévu sur l'élément porteur d'écrou (30), pourvu de moyens (36) de verrouillage de l'écrou dans ce logement.

7. Agencement selon l'une des revendications 1 à 6, **caractérisé en ce que** la pièce de la structure fixe est une traverse (1) formée par un profilé en U , sur la base (4) de laquelle l'objet à fixer est susceptible d'être monté et dont les branches (13, 17) comportent des découpes (12, 16) de logement du dispositif de support d'écrou (10), de façon que l'élément porteur d'écrou (30) soit déplaçable dans une position dans laquelle l'écrou (8) logé dans cet élément est plaqué sous la base (4) de la traverse.

8. Agencement selon la revendication 7, **caractérisé en ce que** le dispositif de support d'écrou (10) est susceptible d'être inséré dans les découpes (12, 16) par un mouvement d'insertion parallèle à la base (4) de la traverse.

9. Agencement selon la revendication 8, **caractérisé en ce que** les formes des découpes (12, 16) sont complémentaires à la partie avant (11) ou arrière (15) de l'organe de base (28) qu'elles reçoivent, en étant différentes l'une de l'autre, de façon à assurer un détrompage lors de l'insertion du dispositif de support d'écrou (10).

10. Agencement selon l'une des revendications 7 à 9, **caractérisé en ce que** les parties avant (11) et arrière (15) du dispositif de support d'écrou (10) sont reçues dans leurs découpes de logement (12, 16) respectives, avec un certain jeu latéral et en hauteur.

11. Agencement selon l'une des revendications 1 à 10, **caractérisé en ce que** le corps de base (28) comporte un évidement (38) dé réception de l'écrou (8) permettant à cette dernière d'avoir une largeur égale à la largeur du corps de base et/ou que la découpe 16.

## Claims

1. An arrangement for holding a fastening nut of an object such as a motor vehicle seat, on one part of a fixed structure (1) by means of a screw engaging in this nut, **characterized in that** it comprises a nut holding device (10) made from at least two parts (28, 30), one of them being a base member (28), which can be made integral with the structural part (1), and the other one being an element (30) for bearing the nut (8), which is mounted in the base member, while being mobile in the direction of the nut axis.

2. The arrangement according to claim 1, **characterized in that** the nut bearing element (30) can be moved between a position retracted into the base member (28) and an extended seat fastening position.

3. The arrangement according to claim 2, **characterized in that** the nut bearing element (30) can be moved into the base body (28) on the nut axis, while being anti-rotationally locked.

4. The arrangement according to any of claims 2 to 3, **characterized in that**, in the state of leaving production, the nut bearing element (30) is in the extended position thereof and is connected to the base member (28) by breakable links (40).

5. The arrangement according to claim 4, **characterized in that** the breakable links (4) can be broken by pressure on the nut bearing element (30) in the direction of indentation thereof into the base body (28).

6. The arrangement according to any of claims 1 to 5, **characterized in that** the nut is likely to be entrained into a receiving housing provided on the nut bearing element (30), provided with means (36) for locking the nut inside this housing.

7. The arrangement according to any of claims 1 to 6, **characterized in that** the part of the fixed structure is a crossbar (1) formed by a U-shaped profile, at the base (4) of which the object to be fastened can be mounted, and the branches (13, 17) of which comprise cut-outs (12, 16) for housing the nut holding device (10), so that the nut bearing element (30) can be moved into a position in which the nut (8) housed inside this element is pressed under the base (4) of the crossbar.

8. The arrangement according to claim 7, **characterized in that** the nut holding device (10) can be inserted into the cut-outs (12, 16) by an insertion movement parallel to the base (4) of the crossbar.

9. The arrangement according to claim 8, **characterized in that** the shapes of the cut-outs (12, 16) are complementary to the front (11) or back (15) part of the base member (28) they receive, while being different from each other, so as to ensure keying when the nut holding device (10) is inserted.

10. The arrangement according to any of claims 7 to 9, **characterized in that** the front (11) and back (15) parts of the nut holding device (10) are received in their respective housing cut-outs (12, 16), with some side and height clearance.

11. The arrangement according to any of claims 1 to 10, **characterized in that** the base body (28) comprises a recess (38) for receiving the nut (8), which enables the latter to have a width equal to the width of the base body and/or the cut-out 16.

## Patentansprüche

1. Anordnung zum Halten einer Befestigungsmutter eines Objekts, wie etwa eines Kraftfahrzeugsitzes, auf einem Teil einer ortsfesten Struktur (1) mittels einer Schraube, die in diese Mutter eingreift, **dadurch gekennzeichnet, dass** sie eine Mutterhaltevorrichtung (10) umfasst, die aus mindestens zwei Teilen (28, 30) ausgebildet ist, wobei einer ein Basisorgan (28) ist, das mit dem Strukturteil (1) fest verbindbar ist, und der andere ein Element (30) zum Tragen der Mutter (8) ist, das in dem Basisorgan montiert ist und dabei in der Richtung der Mutterachse beweglich ist.

2. Anordnung nach Anspruch 1, **dadurch gekennzeichnet, dass** das Muttertragelement (30) zwischen einer in das Basisorgan (28) eingezogenen Position und einer ausgefahrenen Sitzbefestigungsposition bewegbar ist.

3. Anordnung nach Anspruch 2, **dadurch gekennzeichnet, dass** das Muttertragelement (30) in den Basiskörper (28) auf der Mutterachse bewegbar ist und dabei drehfest ist.

4. Anordnung nach einem der Ansprüche 2 bis 3, **dadurch gekennzeichnet, dass** sich das Muttertragelement (30) in dem Zustand beim Verlassen der Fertigung in seiner ausgefahrenen Position befindet und mit dem Basisorgan (28) durch zerbrechliche Verbindungsteile (40) verbunden ist.

5. Anordnung nach Anspruch 4, **dadurch gekennzeichnet, dass** die zerbrechlichen Verbindungsteile (4) durch Druck auf das Muttertragelement (30) in die Richtung seiner Vertiefung in den Basiskörper (28) zerbrechbar sind.

6. Anordnung nach einem der Ansprüche 1 bis 5, **dadurch gekennzeichnet, dass** die Mutter in der Lage ist, in eine Empfangsaufnahme (34) mitgenommen zu werden, die auf dem Muttertragelement (30) bereitgestellt wird, das mit Mitteln (36) zum Blockieren der Mutter in dieser Aufnahme versehen ist.

7. Anordnung nach einem der Ansprüche 1 bis 6, **dadurch gekennzeichnet, dass** der Teil der ortsfesten Struktur eine Querstrebe (1) ist, die aus einem U-Profil gebildet wird, an dessen Basis (4) das zu befestigende Objekt montiert werden kann, und dessen Schenkel (13, 17) Ausschnitte (12, 16) zur Aufnahme der Mutterhaltevorrichtung (10) aufweist, so dass das Muttertragelement (30) in eine Position bewegbar ist, in der die Mutter (8), die in diesem Element untergebracht ist, unter der Basis (4) der Querstrebe angedrückt wird.

8. Anordnung nach Anspruch 7, **dadurch gekennzeichnet, dass** die Mutterhaltevorrichtung (10) in der Lage ist, in die Ausschnitte (12, 16) durch eine Einfügungsbewegung parallel zu der Basis (4) der Querstrebe eingefügt zu werden.

9. Anordnung nach Anspruch 8, **dadurch gekennzeichnet, dass** die Formen der Ausschnitte (12, 16) den vorderen (11) oder hinteren (15) Teil des Basisorgans (28), das sie aufnehmen, ergänzen und sich voneinander unterscheiden, um beim Einfügen der Mutterhaltevorrichtung (10) Unverwechselbarkeit sicherzustellen.

10. Anordnung nach einem der Ansprüche 7 bis 9, **dadurch gekennzeichnet, dass** die vorderen (11) und hinteren (15) Teile der Mutterhaltevorrichtung (10) in ihren jeweiligen Aufnahmeausschnitten (12, 16) mit einem gewissen Seiten- und Höhenspiel gehalten werden.

11. Anordnung nach einem der Ansprüche 1 bis 10, **dadurch gekennzeichnet, dass** der Basiskörper (28) eine Aussparung (38) zum Aufnehmen der Mutter (8) umfasst, die es letzterer ermöglicht, eine Breite aufzuweisen, die gleich der Breite des Basiskörpers und/oder des Ausschnitts 16 ist.
